# EUROPÄISCHE PATENTSCHRIFT

(11) **EP 1 060 624 B1**
(45) Veröffentlichungstag und Bekanntmachung des Hinweises auf die Patenterteilung: **06.10.2004**
(21) Anmeldenummer: 99932646.5
(22) Anmeldetag: 06.05.1999
(51) Int. Cl.: H04Q 7/22, H04L 29/08, H04L 12/28, H04L 12/56

(54) **VERFAHREN ZUR ÜBERTRAGUNG VON NÜTZLICHEN DATEN IN TELEKOMMUNIKATIONSSYSTEMEN MIT SCHNURLOSER TELEKOMMUNIKATION BASIEREND AUF EINEM VORDEFINIERTEN FUNKSCHNITTSTELLENPROTOKOLL ZWISCHEN TELEKOMMUNIKATIONSSGERÄTEN, INSBESONDERE SPRACHDATEN UND/ODER PAKETDATEN IN DECT-SYSTEMEN**
METHOD FOR TRANSMITTING USEFUL DATA IN TELECOMMUNICATION SYSTEMS WITH CORDLESS TELECOMMUNICATION BASED ON A PREDEFINED RADIO INTERFACE PROTOCOL BETWEEN TELECOMMUNICATION DEVICES, ESPECIALLY VOICE DATA AND/OR PACKET DATA IN DECT SYSTEMS
PROCEDE POUR LA TRANSMISSION DE DONNEES UTILES DANS DES SYSTEMES DE TELECOMMUNICATION METTANT EN OEUVRE UNE TELECOMMUNICATION SANS FIL, FONDEE SUR UN PROTOCOLE D'INTERFACE RADIO PREDEFINI, ENTRE DES APPAREILS DE TELECOMMUNICATION, NOTAMMENT DES DONNEES VOCALES ET/OU DE PAQUETS DANS DES SYSTEMES DECT

(30) Priorität: 06.05.1998 DE 19820233
(43) Veröffentlichungstag der Anmeldung: 20.12.2000
(73) Patentinhaber: SIEMENS AKTIENGESELLSCHAFT, 80333 München (DE)
(72) Erfinder: KORDSMEYER, Martin, D-48477 Hörstel (DE); KRUK, Anton, D-40699 Erkrath (DE)
(86) Internationale Anmeldenummer: PCT/DE1999/001370
(87) Internationale Veröffentlichungsnummer: WO 1999/057848

(56) Entgegenhaltungen:
- EP-A- 0 708 576
- WO-A-91/15070
- GB-A- 2 168 573
- GB-A- 2 315 964

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrecke drahtlos auf der Basis von diversen Nachrichtenübertragungsverfahren FDMA (Frequency Division Multiple Access), TDMA (Time Division Multiple Access) und/oder CDMA (Code Division Multiple Access) - z.B. nach Funkstandards wie DECT, GSM, WACS oder PACS, IS-54, IS-95, PHS, PDC etc. [vgl. IEEE Communications Magazine, January 1995, Seiten 50 bis 57; D.D. Falconer et al:" Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf ein Verfahren zum Übertragen von Nutzdaten in Telekommunikationssystemen mit drahtloser auf einem vorgegebenen Luftschnittstellenprotokoll basierender Telekommunikation zwischen Telekommunikationsgeräten, insbesondere Sprach- und/oder Paketdaten in DECT-Systemen.

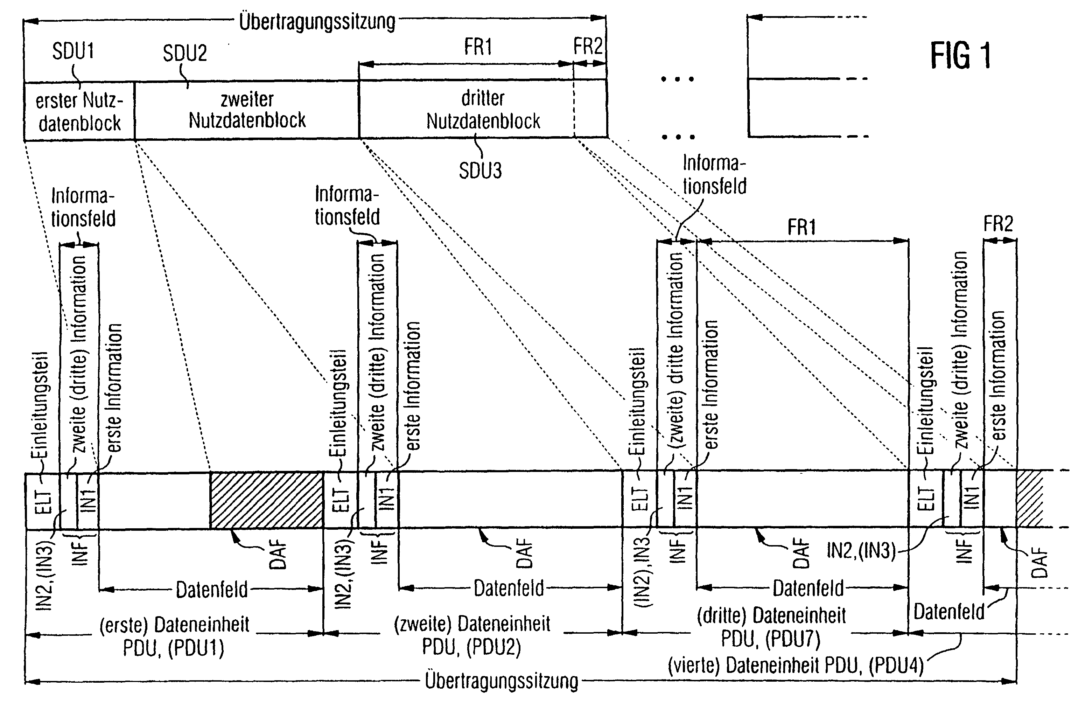

Die drahtlose Übertragung von Nutzdaten - z.B. das Senden und Empfangen von beispielsweise Sprach- und/oder Paketdaten auf dem Funkweg über größere Entfernungen - zwischen räumlich voneinander getrennten, als Datenquelle und Datensenke ausgebildeten durch drahtlose Telekommunikation verbindbaren Telekommunikationsgeräten eines Telekommunikationssystems bzw. eines Telekommunikationsnetzes (Szenario zur Fernübertragung von Nutzdaten) kann z.B. - gemäß der Publikation *"Vortrag von A. Elberse, M. Barry, G. Fleming zum Thema: "DECT Data Services - DECT in Fixed and Mobile Networks", 17.* /*18. Juni 1996, Hotel Sofitel, Paris; Seiten 1 bis 12 und Zusamrnenfassung"* in Verbindung mit den Druckschriften **(1)** *"Nachrichtentechnik Elektronik 42 (1992) Jan.*/*Feb. Nr. 1, Berlin, DE; U. Pilger "Struktur des DECT-Standards", Seiten 23 bis 29;* **(2)** ETSI-Publikation *ETS 300175-1...9, Oktober 1992;* **(3)** Components *31 (1993), Heft 6, Sei ten 215 bis 218; S. Althammer, D. Brückmann: "Hochoptimierte IC's für DECT-Schnurlostelefone";* **(4)** *WO 96*/*38991 (vgl. Figuren 5 und* 6 mit *der jeweils dazugehörigen* Beschreibung); **(5)** *Unterrichtsblätter - Deutsche* Telekom, *Jg. 48, 2*/*1995,* Seiten *102 bis 111;* **(6)**: *WO* 93/21719 *(FIG 1 bis* 3 mit *dazugehöriger Beschreibung) -* mit Hilfe der DECT-Technologie (Digital Enhanced Cordless Telecommuncation) erfolgen. Der DECT-Standard beschreibt eine Funkzugriffstechnologie für die drahtlose Telekommunikation im Frequenzband von 1880 MHz bis 1900 MHz mit einer GFSK-Modulation (Gaussian Frequency Shift Keying) und einer Gaußfiltercharakteristik von BT = 0,5. Mit der DECT-Technologie ist ein Zugriff auf jedes beliebige Telekommunikationsnetz möglich. Darüber hinaus unterstützt die DECT-Technologie eine Vielzahl von unterschiedlichen Anwendungen und Diensten (Service). Die DECT-Anwendungen umfassen z.B. die Telekommunikation im Heimbereich (Residential-Schnurlostelekommunikation), die Zugriffe auf das öffentliche PSTN-, ISDN-, GSM- und/oder LAN-Netz, das WLL-Szenario (Wireless Local Loop) und das CTM-Szenario (Cordless Terminal Mobility). Als Telekommunikationsdienste werden dabei z.B. Sprach-, Fax-, Modem-, E-Mail-, Internet-, X.25-Dienste etc. unterstützt.

Für die Übertragung von Nutzdaten, insbesondere die gesicherte Übertragung von Sprach- und/oder Paketdaten, sieht der DECT-Standard verschiedene Verfahren vor (vgl. ETSI-Publikation ETS 300175-4, September 1996, Kap. 12). Dabei ist es notwendig, die zu übertragenden Nutzdaten in für die Übertragung passende Dateneinheiten bzw. Datenpakete (Protocol Data Unit PDU) aufzuteilen. Die Dateneinheiten bzw. Datenpakete sind dabei an das DECT-Luftschnittstellenprotokoll, insbesondere an die DECT-spezifische TDMA-Struktur und an die verschiedenen Übertragungsarten für die Nutzdatenübertragung (vgl. ETSI-Publikation ETS 300175-4, September 1996, Kap. 12, insbesondere Tabellen 21 bis 26), angepaßt. Für die Aufteilung der Nutzdaten in die Dateneinheiten enthält der DECT-Standard weiterhin einen Segmentierungsmechanismus bzw. eine Segmentierungsprozedur, der bzw. die es gestattet, daß in jeder Dateneinheit nur ein einziger Nutzdatenblock (Service Data Unit SDU) oder gegebenenfalls nur ein einziges Fragment eines Nutzdatenblockes übertragbar ist.

FIGUR 1 zeigt anhand einer nicht maßstabsgetreuen Prinzipdarstellung ein Nutzdatenübertragungsszenario, bei dem in einer Übertragungssitzung zur Übertragung von Nutzdaten in einem DECT-System beispielsweise zwischen einer als Sendegerät bzw. Empfangsgerät dienenden DECT-Basisstation und einem als Empfangsgerät bzw. Sendegerät dienenden DECT-Mobilteil z.B. drei Nutzdatenblöcke, ein erster Nutzdatenblock SDU1, ein zweiter Nutzdatenblock SDU2 und ein dritter Nutzdatenblock SDU3, gemäß dem DECT-Luftschnittstellenprotokoll übertragen werden.

Für diese Übertragungssitzung steht eine vorgegebene Anzahl von an das DECT-Luftschnittstellenprotokoll, insbesondere an die DECT-spezifische TDMA-Struktur und an die verschiedenen Übertragungsarten für die Nutzdatenübertragung, angepaßten Dateneinheiten PDU, eine erste Dateneinheit PDU1, eine zweite Dateneinheit PDU2, eine dritte Dateneinheit PDU3 und eine vierte Dateneinheit PDU4, zur Verfügung, die jeweils im wesentlichen eine fest vorgegebene Grundstruktur aufweisen und die gemäß dem DECT-Luftschnittstellenprotokoll nacheinander übertragen werden. Die Grundstruktur der Dateneinheiten PDU1...PDU4 besteht jeweils aus einem Einleitungsteil ELT, dem sogenannten PDU-Header, einem Informationsfeld INF und einem Datenfeld DAF, die in der angegebenen Reihenfolge in den Dateneinheiten PDU1...PDU4 angeordnet sind.

Das Informationsfeld INF enthält eine erste Information IN1 und eine als Bit ausgebildete Zusatzinformation (Extension). Die Zusatzinformation besteht entweder aus einer den Wert "0" des Bit repräsentierenden zweiten Information IN2 oder aus einer den Wert "1" des Bit repräsentierenden dritten Information IN3. Welche Bedeutung den einzelnen Informationen zukommt, wird nachfolgend erläutert.

Bei der angegebenen Übertragungssitzung werden der erste Nutzdatenblock SDU1 in der ersten Dateneinheit PDU1, der zweite Nutzdatenblock SDU2 in der zweiten Dateneinheit PDU2 und der dritte Nutzdatenblock SDU3 in der dritten Dateneinheit PDU3 und der vierten Dateneinheit PDU4 übertragen.

### Erste Dateneinheit PDU1

Der erste Nutzdatenblock SDU1 wird von dem sendenden Telekommunikationsgerät (Sendegerät) des DECT-Systemes in das Datenfeld DAF der ersten Dateneinheit PDU1 gepackt. Damit das empfangende Telekommunikationsgerät (Empfangsgerät) auswerten (erkennen) kann, wie groß die Nutzdatenlänge der Nutzdaten in dem Datenfeld DAF der ersten Dateneinheit PDU1 ist und ob die in dem Datenfeld DAF enthaltenen Nutzdaten ein Fragment des ersten Nutzdatenblockes SDU1 bzw. das Nicht-Ende des ersten Nutzdatenblockes SDU1 oder den vollständigen ersten Nutzdatenblock SDU1 bzw. das Ende des ersten Nutzdatenblockes SDU1 darstellen, ist nach dem Einleitungsteil ELT das Informationsfeld INF mit den Informationen IN1...IN3 vorgesehen.

Im vorliegenden Fall gibt die erste Information IN1, weil der erste Nutzdatenblock SDU1 kleiner als das Datenfeld DAF der ersten Dateneinheit PDU1 ist, die Nutzdatenlänge des ersten Nutzdatenblockes SDU1 an, während die zweite Information IN2 angibt, daß die in dem Datenfeld DAF enthaltenen Nutzdaten den vollständigen ersten Nutzdatenblock SDU1 darstellen und daß das Ende des ersten Nutzdatenblockes SDU1 vorliegt. Die als Zusatzinformation prinzipiell auch mögliche dritte Information IN3 ist in dem vorliegenden Fall in der FIGUR 1 in "()" dargestellt.

Da der erste Nutzdatenblock SDU1 kleiner als das Datenfeld DAF der ersten Dateneinheit PDU1 ist und für die Nutzdatenübertragung die Bedingung gilt, daß in jeder Dateneinheit PDU nur ein zumindest als Fragment ausgebildeter Nutzdatenblock SDU übertragbar ist, bleibt der in FIGUR 1 schraffierte Bereich des Datenfeldes DAF für die Nutzdatenübertragung ungenutzt. Dies hat letztendlich zur Folge, daß die gemäß DECT-Standard zur Verfügung stehende Funkkanalkapazität nicht optimal ausgenutzt wird. Mit anderen Worten die für die Telekommunikation in dem DECT-System zur Verfügung stehende Bandbreite wird schlecht genutzt.

Darüber hinaus verschlechtert sich dadurch auch die Übertragungsgeschwindigkeit bei der Nutzdatenübertragung.

Außerdem führt diese Art der Nutzdatenübertragung dazu, daß bei Verlust eines Nutzdatenblockes auf der Funkstrecke zwischen der DECT-Basisstation und dem DECT-Mobilteil infolge von Übertragungsstörungen die dadurch entstehende größere Übertragungszeitdauer bei der Nutzdatenübertragung (Auftreten eines Zeitverlustes) nicht aufgeholt bzw. kompensiert werden kann. Das bedeutet, daß die im Telekommunikationsgerät (DECT-Basisstation und/oder DECT-Mobilteil) zu übertragende Nutzdatenmenge, obwohl die Übertragungsgüte der Übertragungsstrecke zwischen den Telekommunikationsgeräten u.U. nur vorübergehend schlecht ist, erhalten bleibt also nicht abgebaut wird und daß nach einer erneuten Störung der Übertragungsstrecke durch eine immer größer werdende Nutzdatenmenge ein Eingriff in den Datentransfer erforderlich ist.

Damit dieses nachteilige unerwünschte Phänomen gar nicht erst auftritt, ist es gemäß dem DECT-Standard möglich, eine feste Reservekapazität in der Dateneinheit zur Übertragung von Nutzdaten vorzusehen, die bei Übertragungsverlusten benutzt werden kann.

### Zweite Dateneinheit PDU2

Der zweite Nutzdatenblock SDU2 wird von dem sendenden Telekommunikationsgerät (Sendegerät) des DECT-Systemes in das Datenfeld DAF der zweiten Dateneinheit PDU2 gepackt. Damit das empfangende Telekommunikationsgerät (Empfangsgerät) auswerten (erkennen) kann, wie groß die Nutzdatenlänge der Nutzdaten in dem Datenfeld DAF der zweiten Dateneinheit PDU2 ist und ob die in dem Datenfeld DAF enthaltenen Nutzdaten ein Fragment des zweiten Nutzdatenblockes SDU2 bzw. das Nicht-Ende des zweiten Nutzdatenblockes SDU2 oder den vollständigen zweiten Nutzdatenblock SDU2 bzw. das Ende des zweiten Nutzdatenblockes SDU2 darstellen, ist nach dem Einleitungsteil ELT das Informationsfeld INF mit den Informationen IN1...IN3 vorgesehen.

Im vorliegenden Fall gibt die erste Information IN1, weil der zweite Nutzdatenblock SDU2 genauso groß ist wie das Datenfeld DAF der zweiten Dateneinheit PDU2, die Nutzdatenlänge des zweiten Nutzdatenblockes SDU2 an, während die zweite Information IN2 angibt, daß die in dem Datenfeld DAF enthaltenen Nutzdaten den vollständigen zweiten Nutzdatenblock SDU2 darstellen und daß das Ende des zweiten Nutzdatenblockes SDU2 vorliegt. Die als Zusatzinformation prinzipiell auch mögliche dritte Information IN3 ist in dem vorliegenden Fall in der FIGUR 1 in "()" dargestellt.

Da der zweite Nutzdatenblock SDU2 genauso groß ist wie das Datenfeld DAF der zweiten Dateneinheit PDU2, ist im vorliegenden Fall das Datenfeld DAF der zweiten Dateneinheit PDU2 für die Nutzdatenübertragung vollständig ausgenutzt. Das im Zusammenhang mit der Übertragung des ersten Nutzdatenblockes SDU1 vorstehend beschriebene Phänomen tritt daher im vorliegenden Fall nicht auf.

### Dritte Dateneinheit PDU3 und vierte Dateneinheit PDU4

Der dritte Nutzdatenblock SDU2 wird von dem sendenden Telekommunikationsgerät (Sendegerät) des DECT-Systemes in das Datenfeld DAF der dritten Dateneinheit PDU3 und der vierten Dateneinheit PDU4 gepackt, weil der dritte Nutzdatenblock SDU3 größer ist als das Datenfeld DAF der dritten Dateneinheit PDU3. Die dritte Dateneinheit PDU3 wird daher vollständig mit einem entsprechenden ersten Fragment FR1 des dritten Nutzdatenblockes SDU3 ausgefüllt, während der Rest des dritten Nutzdatenblockes SDU3, ein zweites Fragment FR2, in die vierte Dateneinheit PDU4 untergebracht wird. Damit das empfangende Telekommunikationsgerät (Empfangsgerät) auswerten (erkennen) kann, wie groß die Nutzdatenlänge der Nutzdaten in dem Datenfeld DAF der dritten Dateneinheit PDU3 ist und ob die in dem Datenfeld DAF enthaltenen Nutzdaten ein Fragment des dritten Nutzdatenblockes SDU3 bzw. das Nicht-Ende des dritten Nutzdatenblockes SDU3 oder den vollständigen dritten Nutzdatenblock SDU3 bzw. das Ende des dritten Nutzdatenblockes SDU3 darstellen, ist nach dem Einleitungsteil ELT das Informationsfeld INF mit den Informationen IN1...IN3 vorgesehen.

Im vorliegenden Fall gibt die erste Information IN1 in der dritten Dateneinheit PDU3 die Nutzdatenlänge des ersten Fragmentes FR1 des dritten Nutzdatenblockes SDU2 an, während die dritte Information IN3 angibt, daß die in dem Datenfeld DAF enthaltenen Nutzdaten das erste Fragment FR1 des dritten Nutzdatenblock SDU3 darstellen und daß das Nicht-Ende des dritten Nutzdatenblockes SDU3 vorliegt. Die als Zusatzinformation prinzipiell auch mögliche zweite Information IN2 ist in dem vorliegenden Fall in der FIGUR 1 in "()" dargestellt.

Da das erst Fragment FR1 des dritten Nutzdatenblockes SDU3 genauso groß ist wie das Datenfeld DAF der dritten Dateneinheit PDU3, ist im vorliegenden Fall das Datenfeld DAF der dritten Dateneinheit PDU3 für die Nutzdatenübertragung vollständig ausgenutzt. Das im Zusammenhang mit der Übertragung des ersten Nutzdatenblockes SDU1 vorstehend beschriebene Phänomen tritt daher im vorliegenden Fall nicht auf.

In der vierten Dateneinheit PDU4 gibt die erste Information IN1 die Nutzdatenlänge des zweiten Fragmentes FR2 des dritten Nutzdatenblockes SDU3 an, während die zweite Information IN2 angibt, daß die in dem Datenfeld DAF enthaltenen Nutzdaten das zweite Fragment FR2 des dritten Nutzdatenblock SDU3 darstellen, daß das zweite Fragment FR2 den Rest des dritten Nutzdatenblockes SDU3 darstellt und daß das Ende des dritten Nutzdatenblockes SDU3 vorliegt. Die als Zusatzinformation prinzipiell auch mögliche dritte Information IN3 ist in dem vorliegenden Fall in der FIGUR 1 in "()" dargestellt.

Mit der Übertragung der Nutzdatenblöcke SDU1...SDU3 ist die Übertragungssitzung zumindest temporär beendet. Das bedeutet z.B. für Abwärtsübertragungsstrecke (Downlink), daß die DECT-Basisstation im Moment keine Nutzdaten mehr hat, die es dem DECT-Mobilteil übertragen soll. Dieser Nichtübertragungszustand (Default-Zustand) wird dem DECT-Mobilteil automatisch dadurch mitgeteilt, daß erstens gemäß der vorstehend erwähnten vorgegebenen Übertragungsvereinbarung - die beinhaltet, daß in jeder Dateneinheit nur ein einziger Nutzdatenblock (Service Data Unit SDU) oder gegebenenfalls nur ein einziges Fragment eines Nutzdatenblockes übertragbar ist - in der vierten Dateneinheit PDU4 nur das zweite Fragment FR2 des dritten Nutzdatenblockes SDU3 übertragen wird und daß zweitens keine weitere Dateneinheit mit Nutzdaten von der DECT-Basisstation zum DECT-Mobilteil gesendet wird. Die vorstehenden Ausführungen für die Abwärtsübertragungsstrecke (Downlink) sind auch auf den Fall übertragbar, daß die Übertragungssitzung auf der Aufwärtsübertragungsstrecke (Uplink) erfolgt.

Da das zweite Fragment FR2 des dritten Nutzdatenblockes SDU3 kleiner als das Datenfeld DAF der vierten Dateneinheit PDU4 ist und für die Nutzdatenübertragung die Bedingung gilt, daß in jeder Dateneinheit PDU nur ein zumindest als Fragment ausgebildeter Nutzdatenblock SDU übertragbar ist, bleibt der in FIGUR 1 schraffierte Bereich des Datenfeldes DAF für die Nutzdatenübertragung ungenutzt. Dies hat letztendlich zur Folge, daß die gemäß DECT-Standard zur Verfügung stehende Funkkanalkapazität nicht optimal ausgenutzt wird. Mit anderen Worten die für die Telekommunikation in dem DECT-System zur Verfügung stehende Bandbreite wird schlecht genutzt.

Darüber hinaus verschlechtert sich dadurch auch die Übertragungsgeschwindigkeit bei der Nutzdatenübertragung.

Außerdem führt diese Art der Nutzdatenübertragung dazu, daß bei Verlust eines Nutzdatenblockes auf der Funkstrecke zwischen der DECT-Basisstation und dem DECT-Mobilteil infolge von Übertragungsstörungen die dadurch entstehende größere U-bertragungszeitdauer bei der Nutzdatenübertragung (Auftreten eines Zeitverlustes) nicht aufgeholt bzw. kompensiert werden kann. Das bedeutet, daß die im Telekommunikationsgerät (DECT-Basisstation und/oder DECT-Mobilteil) zu übertragende Nutzdatenmenge, obwohl die Übertragungsgüte der Übertragungsstrecke zwischen den Telekommunikationsgeräten u.U. nur vorübergehend schlecht ist, erhalten bleibt also nicht abgebaut wird und daß nach einer erneuten Störung der Übertragungsstrecke durch eine immer größer werdende Nutzdatenmenge ein Eingriff in den Datentransfer erforderlich ist.

Aus der EP 0 708 576 A2 ist ein Verfahren zur Übertragung von Nutzdaten in Telekommunikationssystemen bekannt, bei dem es darum geht, wie als CDMA-Datenpakete ausgebildete Nutzdatenblöcke in als Dateneinheiten ausgebildete ATM-Zellen übertragen werden können. Für diese Übertragung wird zwischen einem Multiplex-Betrieb und einem Nicht-Multiplex-Betrieb unterschieden. Bei dem Nicht-Multiplex-Betrieb ist ein erstes Steuerungsoktett in dem Informationsfeld einer ATM-Zelle enthalten, während bei dem Multiplex-Betrieb das erste Steuerungsoktett und ein zweites Steuerungsoktett in dem Informationsfeld der ATM-Zelle enthalten sind. Das erste Steuerungsoktett enthält ein ACO-Feld von einer Bitlänge und ein PL-Feld von sechs Bitlängen und ein Paritätsfeld von einer Bitlänge. Mit dem ACO-Feld wird angegeben, ob dem ersten Steuerungsoktett unmittelbar das zweite Steuerungsoktett folgt oder nicht. Mit dem PL-Feld wird unabhängig davon, ob dem ersten Steuerungsoktett ein zweites Steuerungsoktett folgt oder nicht, die Paketlänge des CDMA-Datenpakets angegeben, das dem Steuerungsoktett oder den Steuerungsoktetts unmittelbar folgt. Das Paritätsfeld dient zur Fehlererkennung.

Die der Erfindung zugrundeliegende Aufgabe besteht darin, Nutzdaten in Telekommunikationssystemen mit drahtloser auf einem vorgegebenen Luftschnittstellenprotokoll basierender Telekommunikation zwischen Telekommunikationsgeräten, insbesondere Sprach- und/oder Paketdaten in DECT-Systemen mit einer verbesserten Ausnutzung der Bandbreite des Telekommunikationssystems und mit einer größeren Übertragungsgeschwindigkeit zu übertragen.

Diese Aufgabe wird durch die Merkmale des Patentanspruches 1 gelöst.

Die der Erfindung zugrundeliegende Idee besteht darin, bei Nutzdatenübertragung in Telekommunikationssystemen mit drahtloser auf einem vorgegebenen Luftschnittstellenprotokoll basierender Telekommunikation zwischen Telekommunikationsgeräten, insbesondere Sprach- und/oder Paketdaten in DECT-Systemen zu übertragende Nutzdatenblöcke kaskadiert (in Form einer Kaskadenanordnung) in an das Luftschnittstellenprotokoll angepaßten Dateneinheiten bzw. Datenpaketen über die Luft zu transportieren. Die Dateneinheiten bzw. Datenpakete enthalten dabei jeweils so viele insbesondere als Längenindikatoren zum Angeben der jeweiligen Nutzdatenlänge ausgebildete Informationsfelder, wie Nutzdatenblöcke bzw. Fragmente von Nutzdatenblöcke in der jeweiligen Dateneinheit enthalten sind. Jedes Informationsfeld enthält darüber hinaus in Form einer verketteten Liste eine Zusatzinformation (einen Verweis), ob in der jeweiligen Dateneinheit weitere Nutzdatenblöcke bzw. weitere Fragmente von Nutzdatenblöcken folgen.

Durch diese Vorgehensweise (dieses Verfahren) ist es möglich, daß die Übertragungskapazität in dem Telekommunikationssystem bzw. die Bandbreite des Telekommunikationssystem optimal ausgenutzt wird und daß Zeitverzögerungen bei der Nutzdatenübertragung z.B. infolge von Übertragungsstörungen oder kurzzeitiger Überlastung mit einer höheren als der möglichen Datenübertragungsrate ausgeglichen werden können.

Vorteilhafte Weiterbildungen der Erfindung sind in den Unteransprüchen angegeben.

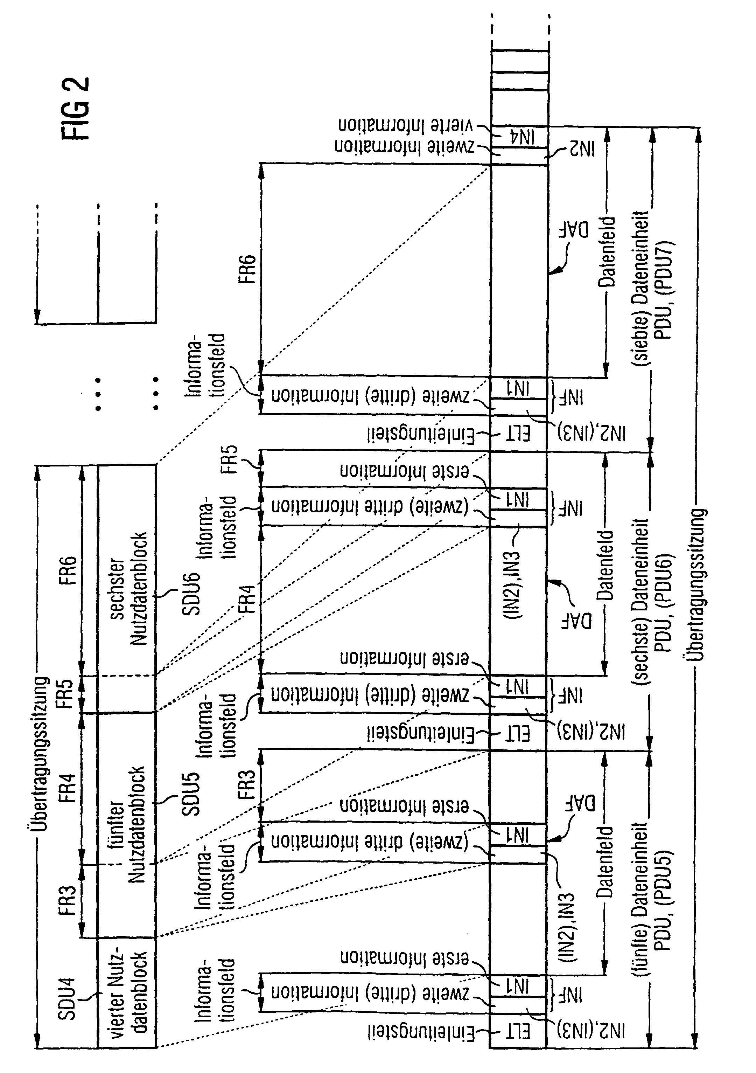

Ein Ausführungsbeispiel der Erfindung wird anhand der FIGUR 2 erläutert.

FIGUR 2 zeigt ausgehend von FIGUR 1 anhand einer ebenfalls nicht maßstabsgetreuen Prinzipdarstellung ein Nutzdatenübertragungsszenario, bei dem in einer Übertragungssitzung zur Übertragung von Nutzdaten in einem DECT-System beispielsweise zwischen einer als Sendegerät bzw. Empfangsgerät dienenden DECT-Basisstation und einem als Empfangsgerät bzw. Sendegerät dienenden DECT-Mobilteil z.B. drei Nutzdatenblöcke, ein vierter Nutzdatenblock SDU4, ein fünfter Nutzdatenblock SDU5 und ein sechster Nutzdatenblock SDU6, gemäß dem DECT-Luftschnittstellenprotokoll übertragen werden.

Für diese Übertragungssitzung steht eine vorgegebene Anzahl von an das DECT-Luftschnittstellenprotokoll, insbesondere an die DECT-spezifische TDMA-Struktur und an die verschiedenen Übertragungsarten für die Nutzdatenübertragung, angepaßten Dateneinheiten PDU, eine fünfte Dateneinheit PDU5, eine sechste Dateneinheit PDU6 und eine siebte Dateneinheit PDU7, zur Verfügung, die wie die Dateneinheiten PDU1...PDU4 in FIGUR 1 jeweils im wesentlichen eine fest vorgegebene Grundstruktur aufweisen und die gemäß dem DECT-Luftschnittstellenprotokoll nacheinander übertragen werden. Die Grundstruktur der Dateneinheiten PDU5...PDU7 besteht jeweils wieder aus dem Einleitungsteil ELT, dem sogenannten PDU-Header, dem Informationsfeld INF und dem Datenfeld DAF, die in der angegebenen Reihenfolge in den Dateneinheiten PDU5...PDU7 angeordnet sind.

Das Informationsfeld INF enthält wieder die erste Information IN1 und die als Bit ausgebildete Zusatzinformation (Extension). Die Zusatzinformation besteht dabei wieder entweder aus der den Wert "0" des Bit repräsentierenden zweiten Information IN2 oder aus der den Wert "1" des Bit repräsentierenden dritten Information IN3. Die Bedeutung der einzelnen Informationen ist mit der Bedeutung der Informationen in FIGUR 1 identisch.

Bei der angegebenen Übertragungssitzung werden der vierte Nutzdatenblock SDU4 in der fünften Dateneinheit PDU5, der fünfte Nutzdatenblock SDU5 in der fünften Dateneinheit PDU5 und der sechsten Dateneinheit PDU6 und der sechste Nutzdatenblock SDU6 in der sechsten Dateneinheit PDU6 und der siebten Dateneinheit PDU7 übertragen.

### Fünfte Dateneinheit PDU5

Der vierte Nutzdatenblock SDU4 wird von dem sendenden Telekommunikationsgerät (Sendegerät) des DECT-Systemes in das Datenfeld DAF der fünften Dateneinheit PDU5 gepackt. Damit das empfangende Telekommunikationsgerät (Empfangsgerät) auswerten (erkennen) kann, wie groß die Nutzdatenlänge der Nutzdaten in dem Datenfeld DAF der fünften Dateneinheit PDU5 ist und ob die in dem Datenfeld DAF enthaltenen Nutzdaten ein Fragment des vierten Nutzdatenblockes SDU4 bzw. das Nicht-Ende des vierten Nutzdatenblockes SDU4 oder den vollständigen vierten Nutzdatenblock SDU4 bzw. das Ende des vierten Nutzdatenblockes SDU4 darstellen, ist vorzugsweise nach dem Einleitungsteil ELT das Informationsfeld INF mit den Informationen IN1...IN3 vorgesehen.

Im vorliegenden Fall gibt die erste Information IN1, weil der vierte Nutzdatenblock SDU4 kleiner als das Datenfeld DAF der fünften Dateneinheit PDU5 ist, die Nutzdatenlänge des vierten Nutzdatenblockes SDU4 an, während die zweite Information IN2 angibt, daß die in dem Datenfeld DAF enthaltenen Nutzdaten den vollständigen vierten Nutzdatenblock SDU4 darstellen und daß das Ende des vierten Nutzdatenblockes SDU4 vorliegt. Die als Zusatzinformation prinzipiell auch mögliche dritte Information IN3 ist in dem vorliegenden Fall in der FIGUR 2 - wie in FIGUR 1 - in "()" dargestellt.

Da der vierte Nutzdatenblock SDU4 kleiner als das Datenfeld DAF der fünften Dateneinheit PDU5 ist, wird - wie in FIGUR 1 der schraffierte Bereich - ein Datensegment des Datenfeldes DAF für die Übertragung des vierten Nutzdatenblockes SDU4 nicht benötigt. Im Unterschied zu FIGUR 1 wird dieses Segment - falls noch Nutzdaten zu übertragen sind - von dem sendenden Telekommunikationsgerät (Sendegerät) des DECT-Systemes im wesentlichen mit Nutzdaten des fünften Nutzdatenblockes SDU5 aufgefüllt. Die Einschränkung auf "im wesentlichen" muß deshalb gemacht werden, weil mit der Übertragung von Nutzdaten des fünften Nutzdatenblockes SDU5 in der fünften Dateneinheit PDU5 wieder das Informationsfeld INF mit den Informationen IN1...IN3 benötigt wird.

Das Informationsfeld ist erforderlich, damit das empfangende Telekommunikationsgerät (Empfangsgerät) auswerten (erkennen) kann, ob die in dem freien Datensegment des Datenfeldes DAF in der fünften Dateneinheit PDU5 enthaltenen Nutzdaten ein Fragment des fünften Nutzdatenblockes SDU5 bzw. das Nicht-Ende des fünften Nutzdatenblockes SDU5 oder den vollständigen fünften Nutzdatenblock SDU5 bzw. das Ende des fünften Nutzdatenblockes SDU5 darstellen und wie groß die Nutzdatenlänge der Nutzdaten in dem freien Datensegment des Datenfeldes DAF in der fünften Dateneinheit PDU5 ist.

Das Informationsfeld INF befindet sich vorzugsweise nach dem vierten Nutzdatenblock SDU4 und vor den Nutzdaten des fünften Nutzdatenblockes SDU5 in der fünften Dateneinheit PDU5.

Da der fünfte Nutzdatenblock SDU5 größer ist als das freie Datensegment des Datenfeld DAF in der fünften Dateneinheit PDU5, wird die fünfte Dateneinheit PDU5 vorzugsweise vollständig mit einem entsprechenden dritten Fragment FR3 des fünften Nutzdatenblockes SDU5 ausgefüllt. In dem Informationsfeld INF nach dem vierten Nutzdatenblock SDU4 in der fünften Dateneinheit PDU5 gibt die erste Information IN1 in der fünften Dateneinheit PDU5 die Nutzdatenlänge des dritten Fragmentes FR3 des fünften Nutzdatenblockes SDU5 an, während die dritte Information IN3 angibt, daß die in dem Datensegment des Datenfeldes DAF enthaltenen Nutzdaten das dritte Fragment FR3 des fünften Nutzdatenblockes SDU5 darstellen und daß das Nicht-Ende des fünften Nutzdatenblockes SDU5 vorliegt. Die als Zusatzinformation prinzipiell auch mögliche zweite Information IN2 ist in dem vorliegenden Fall in der FIGUR 2 - wie in FIGUR 1 - in "()" dargestellt.

Da das dritte Fragment FR3 des fünften Nutzdatenblockes SDU5 vorzugsweise genauso groß ist wie das (freie) Datensegment des Datenfeldes DAF in der fünften Dateneinheit PDU5, ist im vorliegenden Fall das Datenfeld DAF der fünften Dateneinheit PDU5 für die Nutzdatenübertragung vollständig ausgenutzt. Das im Zusammenhang mit der Übertragung des ersten Nutzdatenblockes SDU1 in FIGUR 1 beschriebene Phänomen tritt daher im vorliegenden Fall nicht auf.

### Sechste Dateneinheit PDU6

Die Nutzdaten des fünften Nutzdatenblockes SDU5, die nicht mehr in die fünfte Dateneinheit PDU5 gepaßt haben, werden von dem sendenden Telekommunikationsgerät (Sendegerät) des DECT-Systemes in das Datenfeld DAF der sechsten Dateneinheit PDU6 gepackt. Damit das empfangende Telekommunikationsgerät (Empfangsgerät) auswerten (erkennen) kann, wie groß die Nutzdatenlänge der Nutzdaten in dem Datenfeld DAF der sechsten Dateneinheit PDU6 ist und ob die in dem Datenfeld DAF enthaltenen Nutzdaten ein Fragment des fünften Nutzdatenblockes SDU5 bzw. das Nicht-Ende des fünften Nutzdatenblockes SDU5 oder den vollständigen fünften Nutzdatenblock SDU5 bzw. das Ende des fünften Nutzdatenblockes SDU5 darstellen, ist vorzugsweise nach dem Einleitungsteil ELT das Informationsfeld INF mit den Informationen IN1...IN3 vorgesehen.

Im vorliegenden Fall gibt die erste Information IN1, weil ein viertes Fragment FR4 des fünften Nutzdatenblockes SDU5 - in dem die Nutzdaten des fünften Nutzdatenblockes SDU5 enthalten sind, die nicht mehr in die fünfte Dateneinheit PDU5 gepaßt haben - kleiner als das Datenfeld DAF der sechsten Dateneinheit PDU6 ist, die Nutzdatenlänge des vierten Fragmentes FR4 an, während die zweite Information IN2 angibt, daß die in dem Datenfeld DAF enthaltenen Nutzdaten nunmehr den vollständigen fünften Nutzdatenblock SDU5 darstellen und daß das Ende des fünften Nutzdatenblockes SDU5 vorliegt. Die als Zusatzinformation prinzipiell auch mögliche dritte Information IN3 ist in dem vorliegenden Fall in der FIGUR 2 - wie in FIGUR 1 - in "()" dargestellt.

Da das vierte Fragment FR4 des fünften Nutzdatenblockes SDU5 kleiner als das Datenfeld DAF der sechsten Dateneinheit PDU6 ist, wird - wie in FIGUR 1 der schraffierte Bereich - ein Datensegment des Datenfeldes DAF für die Übertragung des fünften Nutzdatenblockes SDU5 nicht benötigt. Im Unterschied zu FIGUR 1 wird dieses Segment - falls noch Nutzdaten zu übertragen sind - von dem sendenden Telekommunikationsgerät (Sendegerät) des DECT-Systemes im wesentlichen mit Nutzdaten des sechsten Nutzdatenblockes SDU6 aufgefüllt. Die Einschränkung auf "im wesentlichen" muß deshalb gemacht werden, weil mit der Übertragung von Nutzdaten des sechsten Nutzdatenblockes SDU6 in der sechsten Dateneinheit PDU6 wieder das Informationsfeld INF mit den Informationen IN1...IN3 benötigt wird.

Das Informationsfeld ist erforderlich, damit das empfangende Telekommunikationsgerät (Empfangsgerät) auswerten (erkennen) kann, ob die in dem freien Datensegment des Datenfeldes DAF in der sechsten Dateneinheit PDU6 enthaltenen Nutzdaten ein Fragment des sechsten Nutzdatenblockes SDU6 bzw. das Nicht-Ende des sechsten Nutzdatenblockes SDU6 oder den vollständigen sechsten Nutzdatenblock SDU6 bzw. das Ende des sechsten Nutzdatenblockes SDU6 darstellen und wie groß die Nutzdatenlänge der Nutzdaten in dem freien Datensegment des Datenfeldes DAF in der sechsten Dateneinheit PDU6 ist.

Das Informationsfeld INF befindet sich vorzugsweise nach dem vierten Fragment FR4 des fünften Nutzdatenblockes SDU5 und vor den Nutzdaten des sechsten Nutzdatenblockes SDU6 in der sechsten Dateneinheit PDU6.

Da der sechste Nutzdatenblock SDU6 größer ist als das freie Datensegment des Datenfeld DAF in der sechsten Dateneinheit PDU6, wird die sechste Dateneinheit PDU6 vorzugsweise vollständig mit einem entsprechenden fünften Fragment FR5 des sechsten Nutzdatenblockes SDU6 ausgefüllt. In dem Informationsfeld INF nach dem vierten Fragment FR4 des fünften Nutzdatenblockes SDU5 in der sechsten Dateneinheit PDU6 gibt die erste Information IN1 in der sechsten Dateneinheit PDU6 die Nutzdatenlänge des fünften Fragmentes FR5 des sechsten Nutzdatenblockes SDU6 an, während die dritte Information IN3 angibt, daß die in dem Datensegment des Datenfeldes DAF enthaltenen Nutzdaten das fünfte Fragment FR5 des sechsten Nutzdatenblockes SDU6 darstellen und daß das Nicht-Ende des sechsten Nutzdatenblockes SDU6 vorliegt. Die als Zusatzinformation prinzipiell auch mögliche zweite Information IN2 ist in dem vorliegenden Fall in der FIGUR 2 - wie in FIGUR 1 - in "()" dargestellt.

Da das fünfte Fragment FR5 des sechsten Nutzdatenblockes SDU6 vorzugsweise genauso groß ist wie das (freie) Datensegment des Datenfeldes DAF in der sechsten Dateneinheit PDU6, ist im vorliegenden Fall das Datenfeld DAF der sechsten Dateneinheit PDU6 für die Nutzdatenübertragung vollständig ausgenutzt. Das im Zusammenhang mit der Übertragung des ersten Nutzdatenblockes SDU1 in FIGUR 1 beschriebene Phänomen tritt daher im vorliegenden Fall nicht auf.

### Siebte Dateneinheit PDU7

Die Nutzdaten des sechsten Nutzdatenblockes SDU6, die nicht mehr in die sechste Dateneinheit PDU6 gepaßt haben, werden von dem sendenden Telekommunikationsgerät (Sendegerät) des DECT-Systemes in das Datenfeld DAF der siebten Dateneinheit _{PD}U7 gepackt. Damit das empfangende Telekommunikationsgerät (Empfangsgerät) auswerten (erkennen) kann, wie groß die Nutzdatenlänge der Nutzdaten in dem Datenfeld DAF der siebten Dateneinheit PDU7 ist und ob die in dem Datenfeld DAF enthaltenen Nutzdaten ein Fragment des sechsten Nutzdatenblockes SDU6 bzw. das Nicht-Ende des sechsten Nutzdatenblockes SDU6 oder den vollständigen sechsten Nutzdatenblock SDU6 bzw. das Ende des sechsten Nutzdatenblockes SDU6 darstellen, ist vorzugsweise nach dem Einleitungsteil ELT das Informationsfeld INF mit den Informationen IN1...IN3 vorgesehen.

Im vorliegenden Fall gibt die erste Information IN1, weil ein sechstes Fragment FR6 des sechsten Nutzdatenblockes SDU6 - in dem die Nutzdaten des sechsten Nutzdatenblockes SDU6 enthalten sind, die nicht mehr in die sechste Dateneinheit PDU6 gepaßt haben - kleiner als das Datenfeld DAF der siebten Dateneinheit PDU7 ist, die Nutzdatenlänge des sechsten Fragmentes FR6 an, während die zweite Information IN2 angibt, daß die in dem Datenfeld DAF enthaltenen Nutzdaten nunmehr den vollständigen sechsten Nutzdatenblock SDU6 darstellen und daß das Ende des sechsten Nutzdatenblockes SDU6 vorliegt. Die als Zusatzinformation prinzipiell auch mögliche dritte Information IN3 ist in dem vorliegenden Fall in der FIGUR 2 - wie in FIGUR 1 - in "()" dargestellt.

Mit der Übertragung der Nutzdatenblöcke SDU4...SDU6 ist die Übertragungssitzung zumindest temporär beendet. Das bedeutet z.B. für Abwärtsübertragungsstrecke (Downlink), daß die DECT-Basisstation im Moment keine Nutzdaten mehr hat, die es dem DECT-Mobilteil übertragen soll. Dieser Nichtübertragungszustand (Default-Zustand) muß dem DECT-Mobilteil im Unterschied zur FIGUR 1 separat mitgeteilt werden. Es wird daher vorzugsweise in der siebten Dateneinheit PDU7 zum Abschluß der Übertragungssitzung im Rahmen des Informationsfeldes eine Sonderinformation übertragen, die diesen Default-Zustand angibt. Die Sonderinformation besteht dabei vorzugsweise aus der zweiten Information IN2 und einer vierten Information IN4. Die vierte Information IN4 gibt dabei an, daß die Nutzdatenlänge des nachfolgenden Nutzdatenblockes die Länge "Null" hat. Dies bedeutet nichts anderes, daß zumindest temporär keine Nutzdaten mehr übertragen werden bzw. von der DECT-Basisstation zum DECT-Mobilteil gesendet werden. Die vorstehenden Ausführungen für die Abwärtsübertragungsstrecke (Downlink) sind auch auf den Fall übertragbar, daß die Übertragungssitzung auf der Aufwärtsübertragungsstrecke (Uplink) erfolgt.

## Patentansprüche

1. Verfahren zum Übertragen von Nutzdaten in Telekommunikationssystemen mit drahtloser auf einem vorgegebenen Luftschnittstellenprotokoll basierender Telekommunikation zwischen Telekommunikationsgeräten, insbesondere Sprachund/oder Paketdaten in DECT-Systemen, mit folgenden Merkmalen:
(a) die Nutzdaten werden in durch das Luftschnittstellenprotokoll vorgegebenen Dateneinheiten (PDUS...PDU7) übertragen,
(b) mindestens ein zumindest als Fragment (FR3...FR6) ausgebildeter Nutzdatenblock (SDU4...SDU6) wird in jeder Dateneinheit (PDU5...PDU7) unabhängig davon, wie die Größe des zumindest als Fragment ausgebildeten Nutzdatenblockes (SDU4...SDU6) im Vergleich zur Größe des jeweils mit Nutzdaten noch nicht belegten freien Teils der Dateneinheit (PDU5...PDU7) ist, übertragen,
(c) eine vom Wert "Null" verschiedene Nutzdatenlänge des jeweiligen zumindest als Fragment (FR3...FR6) ausgebildeten Nutzdatenblockes (SDU4...SDU6) wird jeweils durch eine der Dateneinheit (PDU5...PDU7) zugeordnete erste Information (IN1) angegeben,
(d) das Ende des jeweiligen Nutzdatenblockes (SDU4...SDU6) wird jeweils durch eine der Dateneinheit (PDU5...PDU7) zugeordnete zweite Information (IN2) angegeben,
(e) das Nicht-Ende des jeweiligen Nutzdatenblockes (SDU4...SDU6) wird jeweils durch eine der Dateneinheit (PDU5...PDU7) zugeordnete dritte Information (IN3) angegeben,
(f) eine dem Wert "Null" der Nutzdatenlänge entsprechende vierte Information (IN4) wird zusammen mit der zweiten Information (IN2) in der Dateneinheit (PDU5...PDU7) angegeben bzw. der Dateneinheit (PDU5...PDU7) zugeordnet, wenn die Nutzdatenübertragung, insbesondere innerhalb dieser Dateneinheit, zumindest temporär beendet ist.

2. Verfahren nach Anspruch 1, **dadurch gekennzeichnet, daß**
die Nutzdaten gesichert übertragen werden.

3. Verfahren nach Anspruch 1 oder 2, **dadurch gekennzeichnet, daß**
die erste Information (IN1), die zweite Information (IN2) und die dritte Information (IN3) vor dem zumindest als Fragment ausgebildeten Nutzdatenblock (SDU4...SDU6) in der jeweiligen Dateneinheit (PDUS...PDU7) angeordnet werden.

4. Verfahren nach einem der Ansprüche 1 bis 3, **dadurch gekennzeichnet, daß**
die zweite Information (IN2) aus dem Wert "0" eines Bit besteht und die dritte Information (IN3) aus dem Wert "1" des Bit besteht.

## Claims

1. Method for transmitting service data in telecommunication systems with wireless telecommunication based on a predefined radio interface protocol between telecommunication devices, in particular voice data and/or packet data in DECT systems, having the following features:
(a) the service data is transmitted in protocol data units (PDU5...PDU7) predefined by the radio interface protocol,
(b) at least one service data unit (SDU4...SDU6) embodied at least as a fragment (FR3...FR6) is transmitted in each protocol data unit (PDU5...PDU7) irrespective of the size of the service data unit (SDU4...SDU6), which is embodied at least as a fragment, in comparison with the size of the free part of the protocol data unit (PDU5...PDU7) which is in each case not yet occupied by service data,
(c) a service data length different from the value "zero", of the respective service data unit (SDU4...SDU6) embodied at least as a fragment (FR3...FR6) is in each case specified by a first information item (IN1) allocated to the protocol data unit (PDU5...PDU7),
(d) the end of the respective service data unit (SDU4...SDU6) is in each case specified by a second information item (IN2) allocated to the protocol data unit (PDU5...PDU7),
(e) the non-end of the respective service data unit (SDU4...SDU6) is in each case specified by a third information item (IN3) allocated to the protocol data unit (PDU5...PDU7),
(f) a fourth information item (IN4) corresponding to the value "zero" of the service data length is specified together with the second information item (IN2) in the protocol data unit (PDU5...PDU7) or, as the case may be, allocated to the protocol data unit (PDU5...PDU7) when the transmission of service data is ended at least temporarily, in particular within this protocol data unit.

2. Method according to claim 1, **characterised in that** the service data is transmitted protected.

3. Method according to claim 1 or 2, **characterised in that** the first information item (IN1), the second information item (IN2) and the third information item (IN3) are disposed in front of the service data unit (SDU4...PDU6) which is embodied at least as a fragment in the respective protocol data unit (PDU5 ... PDU7).

4. Method according to one of the claims 1 to 3, **characterised in that**
the second information item (IN2) consists of the value "0" of a bit and the third information item (IN3) consists of the value "1" of the bit.

## Revendications

1. Procédé pour la transmission de données utiles dans des systèmes de télécommunication mettant en oeuvre une télécommunication sans fil, fondée sur un protocole d'interface radio prédéfini, entre des appareils de télécommunication, notamment des données vocales et/ou de paquets dans des systèmes DECT, possédant les caractéristiques suivantes :
(a) les données utiles sont transmises dans des unités de données (PDU5 ... PDU7) prédéfinies par le protocole d'interface radio,
(b) au moins un bloc de données utiles (SDU4 ... SDU6) se présentant au moins sous forme de fragment (FR3 ... FR6) est transmis dans chaque unité de données (PDU5 ... PDU7) indépendamment du rapport entre la taille du bloc de données utiles (SDU4 ... SDU6) se présentant au moins sous forme de fragment et la taille de la partie libre de l'unité de données (PDU5 ... PDU7) qui n'est pas encore occupée, à chaque fois, par des données utiles,
(c) une longueur de données utiles du bloc de données utiles respectif (SDU4 ... SDU6) se présentant au moins sous forme de fragment (FR3 ... FR6) différente de la valeur "zéro" est indiquée à chaque fois par une première information (IN1) associée à l'unité de données (PDU5 ... PDU7),
(d) la fin du bloc de données utiles respectif (SDU4 ... SDU6) est indiquée à chaque fois par une deuxième information (IN2) associée à l'unité de données (PDU5 ... PDU7),
(e) la non-fin du bloc de données utiles respectif (SDU4 ... SDU6) est indiquée à chaque fois par une troisième information (IN3) associée à l'unité de données (PDU5 ... PDU7),
(f) une quatrième information (IN4) correspondant à la valeur "zéro" de la longueur de données utiles est indiquée dans l'unité de données (PDUS ... PDU7) resp. associée à l'unité de données (PDUS ... PDU7) en même temps que la deuxième information (IN2) lorsque la transmission de données utiles, notamment à l'intérieur de cette unité de données, est terminée, au moins provisoirement.

2. Procédé selon la revendication 1, **caractérisé en ce que** les données utiles sont transmises de manière sécurisée.

3. Procédé selon la revendication 1 ou 2, **caractérisé en ce que** la première information (IN1), la deuxième information (IN2) et la troisième information (IN3) sont situées avant le bloc de données utiles (SDU4 ... SDU6) se présentant au moins sous forme de fragment dans l'unité de données respective (PDU5 ... PDU7).

4. Procédé selon l'une des revendications 1 à 3, **caractérisé en ce que** la deuxième information (IN2) est formée par la valeur "0" d'un bit et la troisième information (IN3) est formée par la valeur "1" du bit.
